# EUROPÄISCHE PATENTSCHRIFT

(11) **EP 0 978 678 B1**
(45) Veröffentlichungstag und Bekanntmachung des Hinweises auf die Patenterteilung: **29.11.2000**
(21) Anmeldenummer: 99109828.6
(22) Anmeldetag: 19.05.1999
(51) Int. Cl.: F16L 25/00, H01R 4/64

(54) **Elektrisch leitende Rohr- oder Kabelschelle**
Conductive pipe or cable clamp
Collier de serrage conductible pour tuyaux ou câbles

(30) Priorität: 06.08.1998 DE 29814061 U; 14.08.1998 DE 29814516 U
(43) Veröffentlichungstag der Anmeldung: 09.02.2000
(73) Patentinhaber: Karin Daume Maschinenteile GmbH & Co. KG, 30938 Burgwedel (DE)
(72) Erfinder: Daume, Britta, 30938 Burgwedel (DE)
(74) Vertreter: Leine, Sigurd, Dipl.-Ing.

(56) Entgegenhaltungen:
- EP-A- 0 165 691
- EP-A- 0 744 788
- US-A- 2 432 492
- US-A- 3 756 631
- US-A- 4 221 407
- DR. ING. OTTO SCHWARZ: "Kunststoffkunde", , VOGEL BUCHVERLAG, 6. AUFLAGE, S. 215

## Beschreibung

Die Erfindung betrifft eine Abdichtungseinrichtung der im Oberbegriff des Anspruchs 1 genannten Art zum Bilden einer Abdichtung an der Außenfläche von insbesondere länglichen, beispielsweise im wesentlichen zylindrischen Körpern, beispielsweise Rohren oder Kabeln.

Eine Einrichtung der betreffenden Art ist in Form einer Einrichtung zum elektrisch leitenden Kontaktieren einer elektrisch leitenden Außenfläche eines insbesondere zylindrischen Körpers, beispielsweise eines Rohres oder eines Kabels, durch EP 0 744 788 A1 bekannt. Sie weist einen in Montageposition an dem zu kontaktierenden Körper anliegenden Grundkörper auf, der aus einem metallischen Schellenband besteht, das mit einem elastischen Material beschichtet ist, das durch Gummi gebildet ist.

Die bekannte Einrichtung ist einfach montierbar. Ihre Herstellung ist jedoch aufwendig und damit teuer.

Durch US 3 756 631 ist eine Abdichtungseinrichtung zum Bilden einer Abdichtung an der Außenfläche von Rohren bekannt, die einen in Montageposition dichtend an der Außenfläche des Körpers anliegenden Grundkörper aufweist, der wenigstens teilweise aus elastischem Material besteht. Das elastische Material des Grundkörpers ist bei der bekannten Einrichtung durch ein Polyurethan-Gießelastomer gebildet.

Durch EP 0 165 691 A1 ist eine Einrichtung zum elektrisch leitenden Kontaktieren eines elektrisch leitenden Teiles eines im wesentlichen zylindrischen Körpers in Form eines Rohres bekannt, die einen Grundkörper aufweist, der aus elastomerem Material in Form von synthetischem Kautschuk besteht.

Der vorliegenden Erfindung liegt die Aufgabe zugrunde, eine Einrichtung der im Oberbegriff des Anspruchs 1 genannten Art anzugeben, die den Nachteil der bekannten Einrichtung nicht aufweist, deren Herstellung also einfacher und damit kostengünstiger gestaltet ist.

Diese Aufgabe wird durch die im Anspruch 1 angegebene Lehre gelöst.

Erfindungsgemäß ist das elastische Material wenigstens teilweise, vorzugsweise vollständig durch wenigstens ein thermoplastisches Elastomer (TPE) gebildet. Thermoplastische Elastomere weisen kunststoffähnliche Eigenschaften auf und sind leicht verarbeitbar. Beispielsweise kann der Grundkörper, soweit er aus dem elastischen Material besteht, bei Verwendung von thermoplastischen Elastomeren in einem Spritzverfahren hergestellt werden. Es ist auch möglich, den Grundkörper aus thermoplastischem Elastomer als Bandmaterial in einem Extrudierverfahren herzustellen. Der Grundkörper kann neben thermoplastischem Elastomer auch noch weiteres elastisches Material aufweisen, beispielsweise vulkanisierten Kautschuk

Ein weiterer Vorteil der thermoplastischen Elastomere besteht darin, daß ein Mischen unmittelbar vor Beginn der Verarbeitung nicht erforderlich ist. Diese Materialien sind vielmehr in verarbeitungsfähigem Zustand erhältlich und können in diesem Zustand gelagert werden.

Ein besonderer Vorteil thermoplastischer Elastomere besteht darin, daß sie schnell aushärten und eine Vulkanisation nicht erforderlich ist. Dies verkürzt bei Verarbeitung der Materialien, beispielsweise in einem Spritzverfahren, die erforderliche Verweildauer in der Spritzform, was die Taktzeiten verringert und damit die Herstellung der erfindungsgemäßen Einrichtung kostengünstiger gestaltet.

Darüber hinaus zeichnen sich thermoplastische Elastomere durch eine hohe Alterungsbeständigkeit aus. Sie weisen ferner insbesondere noch folgende Vorteile auf:
- ausgezeichnete Dauerbiegeermüdungsfestigkeit,
- hohe Temperaturbeständigkeit,
- hohe Schlagzähigkeit,
- hohe Chemikalien- und Witterungsbeständigkeit,
- gute elektrische Eigenschaften,
- hohe Zerreiß- und Abriebfestigkeit,
- Co-Spritzgießen und Co-Extrusion mit Polyolefinen ist möglich,
- thermoplastische Elastomere sind mit Pigmenten oder Farbstoffen leicht einfärbbar,
- thermoplastische Elastomere sind umweltfreundlich, da sie recycelbar sind und bei der Verarbeitung gefährliche Dämpfe, beispielsweise Nitrosamine, üblicherweise nicht entstehen.

Unter einem Kontaktieren im Sinne der Erfindung wird ein mechanisches und/oder elektrisches Kontaktieren verstanden. Im letzteren Falle weist die Einrichtung Kontaktmittel zum Herstellen einer elektrisch leitenden Verbindung zwischen dem zu kontaktierenden Körper und einem Leiter, beispielsweise einem Erdungskabel auf.

Der Grundkörper der erfindungsgemäßen Einrichtung kann grundsätzlich im wesentlichen starr ausgebildet sein. Eine zweckmäßige Weiterbildung sieht jedoch vor, daß der Grundkörper biegsam ausgebildet ist. Bei dieser Ausführungsform paßt sich der Grundkörper aufgrund seiner Biegsamkeit an die Oberfläche des zu kontaktieren Körpers an. Dies ermöglicht eine Kontaktierung auch stark unebener oder gekrümmter Körper. Die zu kontaktierenden Körper können in vielfältiger Weise ausgebildet sein, beispielsweise plattenförmig oder stabförmig oder rohrförmig mit beliebigem Querschnitt.

Eine andere Weiterbildung sieht vor, daß der Grundkörper derart ausgebildet ist, daß er in Montageposition den zu kontaktierenden Körper vorzugsweise ringförmig oder muffenförmig umgreift. Beispielsweise bei der Kontaktierung von Rohren oder Kabeln ist der Grundkörper auf diese Weise sicher an dem zu kontaktierenden Körper gehalten.

Eine andere zweckmäßige Ausführungsform sieht vor, daß der Grundkörper als um den zu kontaktierenden Körper spannbare Schelle ausgebildet ist. Bei dieser Ausführungsform ist die Montage der erfindungsgemäßen Einrichtung vereinfacht.

Der Grundkörper der erfindungsgemäßen Einrichtung kann mehrteilig ausgebildet sein, beispielsweise zur Kontaktierung eines Rohres oder eines Kabels durch mehrere in Montageposition in Umfangsrichtung aufeinanderfolgende, beispielsweise halbringförmige Teile. Es ist jedoch vorteilhaft, wenn der Grundkörper einteilig ausgebildet ist und an seinen freien Enden abgewinkelte oder abgebogene Laschen aufweist, die in Montageposition miteinander verbindbar sind, vorzugsweise mittels einer Schraubvorrichtung oder einer Klemmvorrichtung. Aufgrund der einteiligen Ausbildung des Grundkörpers ist bei dieser Ausführungsform die Montage der erfindungsgemäßen Einrichtung weiter vereinfacht. Durch Verbindung der Laschen miteinander ist die Einrichung in schneller und einfacher Weise an dem zu kontaktierenden Körper befestigbar.

Eine andere Weiterbildung der erfindungsgemäßen Lehre sieht quer zur Längsrichtung bzw. in Axialrichtung des Grundkörpers zueinander beabstandete, sich in Längsrichtung bzw. in Umfangsrichtung des Grundkörpers erstreckende Dichtlippen aus elastischem Material vor, die an einer in Montageposition dem zu kontaktierenden Körper zugewandten Seite des Grundkörpers angeordnet sind und in Montageposition dichtend an der Außenfläche des zu kontaktierenden Körpers anliegen. Auf diese Weise ist eine Abdichtung eines in Montageposition zwischen dem abzudichtenden Körper und dem Grundkörper gebildeten Raumes gegen ein Eindringen von Luft, Staub oder Feuchtigkeit erzielt. Bei der vorgenannten Ausführungsform besteht das elastische Material der Dichtlippen zweckmäßigerweise wenigstens teilweise aus wenigstens einem thermoplastischen Elastomer. Hierdurch ergeben sich im Hinblick auf die Herstellung der Dichtlippen die gleichen Vorteile, die sich durch die Verwendung eines thermoplastischen Elastomers bei der Herstellung eines Teils des Grundkörpers ergeben.

Bei den vorgenannten Ausführungsformen können die Dichtlippen separat ausgebildet sein oder mit dem elastischen Material des Grundkörpers verbunden oder einstückig mit diesem ausgebildet sein. Insbesondere dann, wenn die Dichtlippen einstückig mit dem Grundkörper ausgebildet sind, ist die Herstellung der erfindungsgemäßen Einrichtung weiter vereinfacht.

Gemäß einer Ausführungsform weist das thermoplastische Elastomer wenigstens eine der folgenden Materialeigenschaften auf:
- die Shorehärte (A) beträgt etwa 35-85, vorzugsweise etwa 47-70, insbesondere etwa 64 (DIN 53505-A),
- der Druckverformungsrest beträgt weniger als etwa 40%, vorzugsweise weniger als etwa 25% (DIN 53517, Temperatur 70°C, Dauer 48 Stunden),
- die Zugfestigkeit beträgt mehr als etwa 6 MPa (DIN 53540),
- die Reißdehnung beträgt mehr als etwa 300% (DIN 53504),
- der Kälterichtwert beträgt weniger als etwa -20°C, vorzugsweise weniger als etwa -40°C, insbesondere etwa -50°C (DIN 53445-B),
- die Härteänderung nach Alterung ist nicht höher als etwa ±3 (DIN 53508, DIN 53505-A),
- die Änderung der Zugfestigkeit nach Alterung ist nicht größer als etwa ±15% (DIN 53508, DIN 53504),
- die Änderung der Reißdehnung nach Alterung ist nicht größer als etwa ±20% (DIN 53508, DIN 53504),
- das thermoplastische Elastomer ist ozonbeständig und/oder UV-beständig und/oder ölbeständig und/oder witterungsbeständig.

Die vorgenannten Materialeigenschaften haben sich einzeln, insbesondere jedoch in Verbindung miteinander als besonders vorteilhaft erwiesen, insbesondere im Hinblick auf eine einfache Herstellung und die Langlebigkeit der erfindungsgemäßen Einrichtung.

Das thermoplastische Elastomer kann in beliebiger geeigneter Weise auf das Trägerelement aufgebracht werden, beispielsweise durch Gießen oder Spritzen. Es kann jedoch beispielsweise auch durch ein Teil aus extrudiertem Bandmaterial gebildet sein.

Eine Weiterbildung der vorgenannten Ausführungsform sieht vor, daß das Trägerelement bandförmig ausgebildet ist und sich in Längsrichtung bzw. in Umfangsrichtung des Grundkörpers vorzugsweise über dessen gesamte Länge erstreckt und vorzugsweise die Laschen bildet. Diese Ausführungsform ist besonders einfach im Aufbau und damit kostengünstig herstellbar.

Bei den Ausführungsformen mit dem Trägerelement besteht dieses vorzugsweise aus Metall, insbesondere aus Messing und/oder Sondermessing und/oder niedrig legiertem Kupfer und/oder Chrom-Nickel-legiertem Stahl. Diese Materialien weisen eine besonders gute elektrische Leitfähigkeit auf, was insbesondere dann von Vorteil ist, wenn die erfindungsgemäße Einrichtung als Teil einer Einrichtung zum elektrisch leitenden Kontaktieren eines elektrisch leitenden Teiles, beispielsweise eines Rohres oder eines Kabels, verwendet wird und das Trägerelement zur Stromleitung dient.

Die erfindungsgemäße Einrichtung ist vielfältig verwendbar, beispielsweise auch als Anodenschutz oder Kathodenschutz oder zur Aufnahme von Sensoren, die durch eine Loch in eine Rohrleitung eingreifen und von der Einrichtung, beispielsweise in Form einer Muffe, umschlossen sind.

Eine Einrichtung zum elektrisch leitenden Kontaktieren eines elektrisch leitenden Teiles eines insbesondere länglichen, beispielsweise im wesentlichen zylindrischen Körpers, beispielsweise eines Rohres oder eines Kabels, ist im Anspruch 12 angegeben. Sie weist eine erfindungsgemäße Abdichtungseinrichtung und Kontaktmittel zum Herstellen einer elektrisch leitenden Verbindung zwischen dem zu kontaktierenden Körper und einem Leiter, beispielsweise einem Erdungskabel, auf.

Weiterbildungen der erfindungsgemäßen Einrichtung zum elektrisch leitenden Kontaktieren sehen vor, daß das Kontaktelement aus Metall besteht, vorzugsweise durch eine flache Litze, ein flaches Band oder ein Geflechtband aus Metall gebildet ist. Derartige Kontaktelemente sind kostengünstig.

Eine andere Weiterbildung der Ausführungsformen mit dem Kontaktelement sieht vor, daß das Kontaktelement mit dem Trägerelement verbunden ist. Besteht das Trägerelement aus Metall, so ist durch Herstellen einer elektrisch leitenden Verbindung zwischen einem Leiter, beispielsweise einem Erdungskabel, und dem Trägerelement, das in Montageposition von außen zugänglich sein kann, über das an dem zu kontaktierenden Körper anliegende Kontaktelement eine elektrisch leitende Verbindung zu diesem herstellbar.

Eine andere Weiterbildung sieht vor, daß der Grundkörper wenigstens einen Kontaktvorsprung aus elektrisch leitfähigem Material aufweist, der in Montageposition an dem elektrisch leitfähigen Teil des zu kontaktierenden Körpers anliegt und so die Kontaktmittel bildet. Bei dieser Ausführungsform ist ein separates Kontaktelement nicht erforderlich, so daß die erfindungsgemäße Einrichtung in ihrem Aufbau weiter vereinfacht ist.

Bei der vorgenannten Ausführungsform ist der oder jeder Kontaktvorsprung zweckmäßigerweise an dem Trägerelement ausgebildet. Besteht dieses beispielsweise aus Blech, so können die Kontaktvorsprünge durch in das Blech eingepreßte Sicken oder Wölbungen gebildet sein.

Das thermoplastische Elastomer ist entsprechend den jeweiligen Anforderungen innerhalb weiter Grenzen wählbar. Beispielsweise kann das thermoplastische Elastomer durch ein thermoplastisches Polyurethan (TPE-U) und/oder ein Styrolblockcopolymer (TE-S) und/oder ein thermoplastisches Polyolefin-Elastomer (TPE-O) und/oder ein thermoplastisches Copolyester (TPE-E) und/oder ein Polyether-Polyamidblockcopolymer und/oder eine Elastomerlegierung wenigstens eines thermoplastischen Elastomeres sein, wie dies Ausführungsformen vorsehen.

Ein Verfahren zur Herstellung eines aus wenigstens einem thermoplastischen Elastomer und/oder wenigstens einem Trägerwerkstoff bestehenden Verbundproduktes, insbesondere einer Einrichtung nach einem der Ansprüche 1 bis 19, ist im Anspruch 20 angegeben. Weiterbildungen dieses Verfahrens sind in den Ansprüchen 21 und 22 angegeben.

Die Erfindung wird nachfolgend anhand der beigefügten Zeichnung näher erläutert, in der Ausführungsbeispiele dargestellt sind.

Es zeigt:
- Fig. 1: eine schematische Perspektivansicht eines ersten Ausführungsbeispieles der erfindungsgemäßen Einrichtung,
- Fig. 2: in vergrößertem Maßstab einen Axialschnitt durch einen Teil eines mit der Einrichtung gemäß Fig. 1 elektrisch kontaktierten Kabels,
- Fig. 3: in schematischer Perspektivansicht das mit der Einrichtung gemäß Fig. 1 kontaktierte Kabel,
- Fig. 4: in gleicher Darstellung wie Fig. 2 ein zweites Ausführungsbeispiel einer erfindungsgemäßen Einrichtung,
- Fig. 5: eine schematische Ansicht auf die radiale Innenfläche der Einrichtung gemäß Fig. 1,
- Fig. 6: einen schematischen Radialschnitt durch die Einrichtung gemäß Fig. 4 in Montageposition,
- Fig. 7: in schematischer Perspektivansicht ein drittes Ausführungsbeispiel einer erfindungsgemäßen Einrichtung,
- Fig. 8: in ähnlicher Darstellung wie Fig. 7 ein viertes Ausführungsbeispiel einer erfindungsgemäßen Einrichtung,
- Fig. 9: in gleicher Darstellung wie Fig. 7 die Einrichtung gemäß Fig. 8, wobei mit einer Lasche ein Endteil verbunden ist und
- Fig. 10: in gleicher Darstellung wie Fig. 8 die Einrichtung gemäß Fig. 8, wobei mit beiden Laschen Endteile verbunden sind.

In den Figuren der Zeichnung sind gleiche oder sich entsprechende Bauteile mit den gleichen Bezugszeichen versehen.

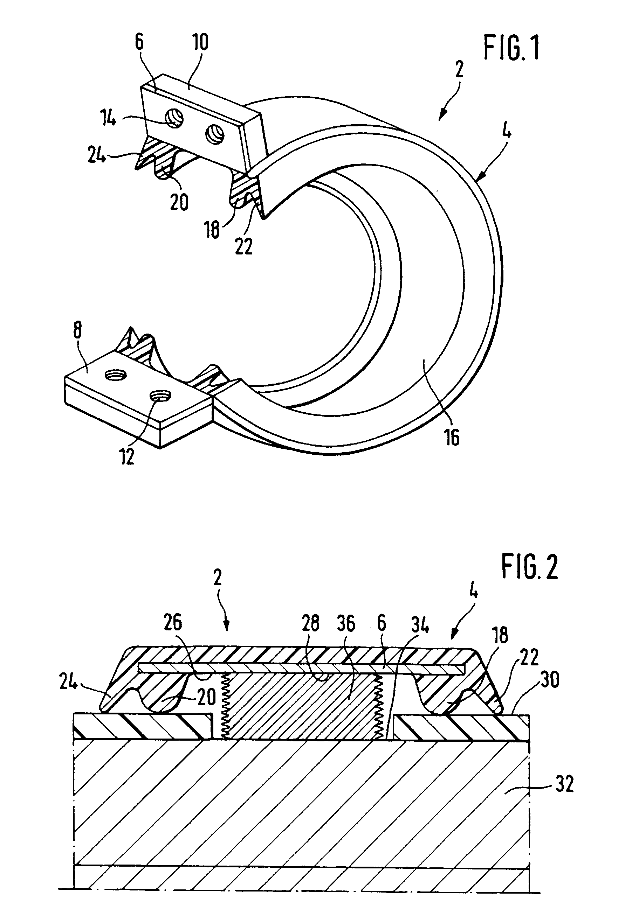

In Fig. 1 ist ein erstes Ausführungsbeispiel einer erfindungsgemäßen Abdichtungseinrichtung in Form einer Einrichtung 2 zum elektrisch leitenden Kontaktieren eines elektrisch leitenden Teiles eines insbesondere länglichen, beispielsweise im wesentlichen zylindrischen Körpers, beispielsweise eines Rohres oder eines Kabels dargestellt. Die Einrichtung 2 weist einen biegsamen Grundkörper 4 aus thermoplastischem Elastomer auf, in das ein bandförmiges Trägerelement 6 aus Metall eingebettet ist.

Das thermoplastische Elastomer weist bei dem Ausführungsbeispiel folgende Materialeigenschaften auf:
- die Shorehärte (A) beträgt etwa 64 (DIN 53505-A),
- der Druckverformungsrest beträgt weniger als etwa 25% (DIN 53517, Temperatur 70°C, Dauer 48 Stunden),
- die Zugfestigkeit beträgt mehr als etwa 6 MPa (DIN 53504),
- die Reißdehnung beträgt mehr als etwa 300% (DIN 53504),
- der Kälterichtwert beträgt weniger als etwa -40°C, insbesondere etwa -50°C (DIN 53445-B),
- die Härteänderung nach Alterung ist nicht höher als etwa ±3 (DIN 53508, DIN 53505-A),
- die Änderung der Zugfestigkeit nach Alterung ist nicht größer als etwa ±15% (DIN 53508, DIN 53504),
- die Änderung der Reißdehnung nach Alterung ist nicht größer als etwa ±20% (DIN 53508, DIN 53504),
- das thermoplastische Elastomer ist ozonbeständig, UV-beständig und ölbeständig.

Der Grundkörper 4 weist an seinen Enden abgewinkelte Laschen 8, 10 auf, wobei sich das Trägerelement 6 in Umfangsrichtung des Grundkörpers 4 bis in den Bereich der Laschen erstreckt. In der Lasche 8 sind Durchgangsbohrungen gebildet, durch die sich in Montageposition der Einrichtung 2 in Fig. 1 nicht dargestellte Schrauben erstrecken und in in der Lasche 10 gebildete Gewindebohrungen 14 eingeschraubt sind, derart, daß durch Spannen der Schrauben die Laschen 8, 10 miteinander verspannbar sind, wobei der Grundkörper 4 der Einrichtung 2 den zu kontaktierenden Körper umschließt. Da die Schrauben in den Gewindebohrungen 14 Kontakt mit dem Trägerelement 6 aus Metall haben, können sie zur Herstellung einer elektrisch leitenden Verbindung des Trägerelementes und damit des zu kontaktierenden Körpers mit einem in Fig. 1 nicht dargestellten Anschlußkabel, beispielsweise einem Erdungskabel verwendet werden.

Die Einrichtung 2 weist ferner an der Innenfläche 16 des Grundkörpers angeordnete, in Axialrichtung zueinander beabstandete Dichtlippen 18, 20 auf, die sich in Umfangsrichtung des Grundkörpers 4 erstrecken und in Montageposition der Einrichtung 2 dichtend an der Außenfläche des zu kontaktierenden Körpers anliegen. Bei dem dargestellten Ausführungsbeispiel sind zusätzlich zu den Dichtlippen 18, 20 in Axialrichtung außen von diesen weitere Dichtlippen 22, 24 angeordnet. Die Dichtlippen 18, 20 sowie die weiteren Dichtlippen 22, 24 bestehen bei dem dargestellten Ausführungsbeispiel aus demselben thermoplastischen Elastomer wie der Grundkörper 4 und sind einstückig mit diesem ausgebildet. Die erfindungsgemäße Einrichtung 2 kann beispielsweise dadurch hergestellt werden, daß das Trägerelement 6 unter Bildung der Dichtlippen 18, 20 sowie der weiteren Dichtlippen 22, 24 durch Umspritzen mit dem thermoplastischen Elastomer in dieses eingebettet wird. Der Grundkörper 4 kann jedoch auch zusammen mit den Dichtlippen 18 - 24 aus extrudiertem Bandmaterial bestehen. Aus Fig. 2 ist ersichtlich, daß durch das thermoplastische Elastomer auf der Innenfläche 26 des Trägerelementes 6 ein Kontaktbereich 28 freigelassen ist.

In der in Fig. 2 dargestellten Montageposition liegt die Einrichtung 2 mit den Dichtlippen 18, 20 sowie den weiteren Dichtlippen 22, 24 an einer Außenfläche 30 eines im wesentlichen zylindrischen Körpers, bei dem in der Zeichnung dargestellten Ausführungsbeispiel an der Außenfläche (Mantelfläche) eines Kabels 32 an. An der Außenfläche 30 des Kabels 32 ist durch Abisolieren des Außenleiters ein elektrisch leitender Bereich 34 gebildet. Zwischen dem elektrisch leitenden Bereich 34 und der Innenfläche 26 des Trägerelementes 6 ist ein Kontaktelement 36 zur Herstellung einer elektrisch leitenden Verbindung zwischen der Außenfläche 30 und der Innenfläche 26 angeordnet, das bei diesem Ausführungsbeispiel durch ein Element aus elastischem Graphit gebildet ist. Das Kontaktelement 36 kann jedoch auch aus Metall bestehen, beispielsweise durch eine Litze oder ein Geflechtband aus Metall gebildet sein.

Beim Verspannen der Lasche 8 mit der Lasche 10 mittels der in Fig. 1 nicht dargestellten Schrauben umschließt der Grundkörper 4 die Außenfläche 30 des Kabels 32, wobei die Dichtlippen 18, 20 und die weiteren Dichtlippen 22, 24 zusammengedrückt werden, dichtend an der Außenfläche 30 des Kabels 32 zur Anlage gelangen und so den zwischen der Innenfläche des Grundkörpers und der Außenfläche 30 des Kabels 32 gebildeten Raum gegen ein Eindringen von Staub und Feuchtigkeit abdichten. Zusätzlich können an den Laschen 8, 10 Dichtmittel vorgesehen sein, die den zwischen der Innenfläche 16 des Grundkörpers 4 und der Außenfläche 30 des Kabels 32 gebildeten Raum in Umfangsrichtung des Grundkörpers abdichten.

Zusätzlich wird beim Verspannen der Laschen 8, 10 das Kontaktelement 36 zwischen der Innenfläche 26 des Trägerelementes 6 und dem elektrisch leitendem Bereich 34 an der Außenfläche 30 des Kabels 32 zusammengedrückt und stellt auf diese Weise eine elektrisch leitende Verbindung zwischen dem Außenleiter des Kabels 32 und dem Trägerelement 6 her. Über die das Trägerelement 6 in den Gewindebohrungen 14 durchsetzenden Schrauben ist dann eine elektrisch leitende Verbindung zwischen dem Außenleiter des Kabels 32 und einem externen Leiter, beispielsweise einem Erdungskabel, herstellbar.

Aus Fig. 2 ist ersichtlich, daß die Dichtlippen 18, 20 jeweils relativ zu der zugeordneten Längskante 38, 40 des Trägerelementes 6 des Grundkörpers 4 derart angeordnet sind, daß sich die Dichtlippen 18, 20 jeweils in Axialrichtung von einem Bereich innen von der zugeordneten Längskante 38, 40 bis etwa in den Bereich der zugeordneten Längskante 38, 40 erstrekken. Auf diese Weise ist sichergestellt, daß das Material der Dichtlippen beim Anbringen der Einrichtung 2 an dem Kabel 32 zwischen dem Trägerelement 6 und der Außenfläche 30 des Kabel 32 gleichmäßig zusammengedrückt wird, und nicht jeweils in Axialrichtung nach außen weggedrückt wird. Dadurch, daß das elastische Material des Grundkörpers zusammen mit den Dichtlippen 18, 20 und den weiteren Dichtlippen 22, 24 aus einem thermoplastischen Elastomer besteht, ist die Herstellung der erfindungsgemäßen Einrichtung 2 kostengünstig gestaltet. Das thermoplastische Elastomer ist einfach und damit kostengünstig verarbeitbar, beispielsweise durch Spritzen, Gießen oder Extrudieren. Eine Vulkanisation ist nicht erforderlich. Dies verringert bei der Fertigung der erfindungsgemäßen Einrichtung die Taktzeiten und senkt die Herstellungskosten.

Durch die oben genannten Materialeigenschaften des thermoplastischen Elastomers ist die erfindungsgemäße Einrichtung 2 robust, langlebig und alterungsbeständig sowie mechanisch stark beanspruchbar. Sie ist darüber hinaus in einem weiten Temperaturbereich einsetzbar.

Die in den Figuren 1 und 2 dargestellte Einrichtung 2 kann auch als Einrichtung zum Abdichten, beispielsweise einer elektrisch leitenden Kontaktierung oder dergleichen an einer Außenfläche eines insbesondere zylindrischen Körpers gegen ein Eindringen von Feuchtigkeit oder Staub in den Bereich der Kontaktierung, verwendet werden. In diesem Fall sind die Kontaktmittel, insbesondere das Kontaktelement 36 und ggf. auch das Trägerelement 6 aus Metall, nicht erforderlich.

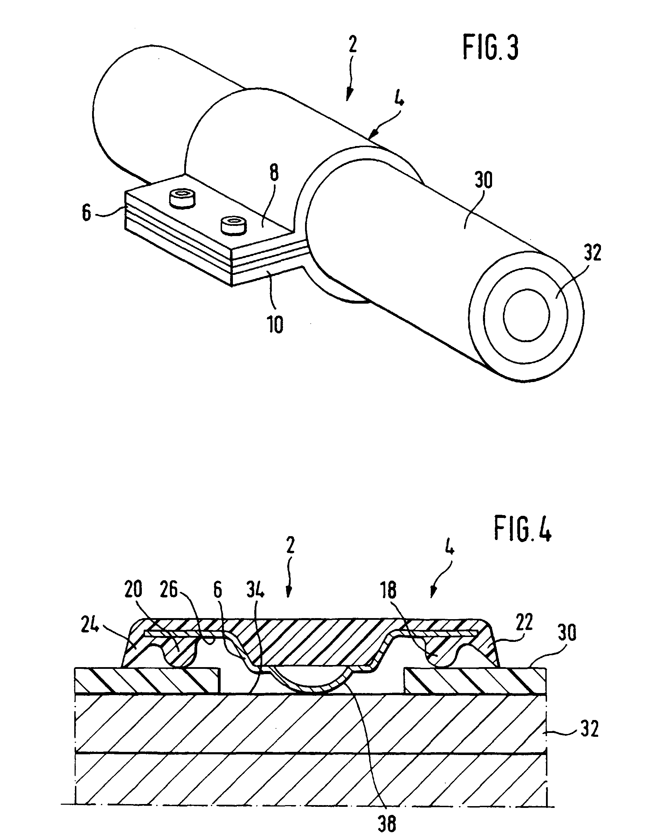

Fig. 3 zeigt die Einrichtung 2 gemäß Fig. 1 und Fig. 2 in Montageposition. Es ist ersichtlich, daß der Grundkörper 4 in dieser Montageposition an dem Kabel 32 anliegt und dieses muffenförmig umgreift.

Fig. 4 zeigt ein zweites Ausführungsbeispiel einer erfindungsgemäßen Einrichtung zum elektrisch leitenden Kontaktieren, das sich von dem Ausführungsbeispiel gemäß Fig. 1 dadurch unterscheidet, daß anstelle des Kontaktelementes 36 Kontaktvorsprünge vorgesehen sind, von denen in Fig. 4 lediglich ein mit dem Bezugszeichen 38 versehener Kontaktvorsprung erkennbar ist. Der Kontaktvorsprung 38 ist durch eine im Querschnitt zu dem Kabel 32 hin konvexe, in der Draufsicht im wesentlichen kreisförmige Profilierung in Form einer Wölbung gebildet.

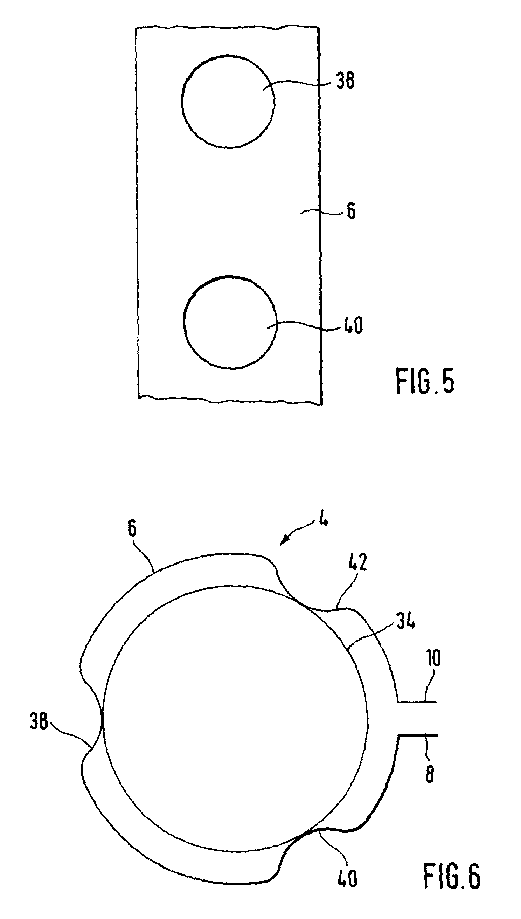

Aus Fig. 5, die eine Ansicht auf die radiale Innenfläche des Grundkörpers 4 zeigt, ist ersichtlich, daß der Kontaktvorsprung 38 und ein weiterer Kontaktvorsprung 40 jeweils durch eine in der Draufsicht kreisförmige Profilierung in dem Trägerelement 6 gebildet sind.

Aus Fig. 6, die einen schematischen Radialschnitt durch die Einrichtung 2 in Montageposition zeigt, ist ersichtlich, daß neben den Kontaktvorsprüngen 38, 40 noch ein weiterer Kontaktvorsprung 42 vorhanden ist und daß die Kontaktvorsprünge 38, 40, 42 in Umfangsrichtung des Grundkörpers 4 zueinander im wesentlichen gleich beabstandet sind.

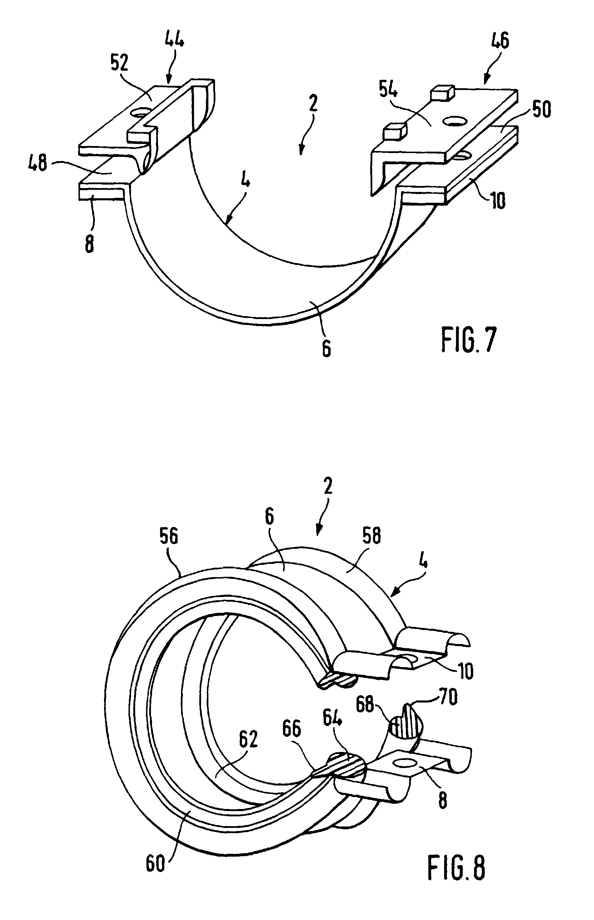

In Fig. 7 ist ein drittes Ausführungsbeispiel einer erfindungsgemäßen Einrichtung 2 dargestellt, das sich von dem Ausführungsbeispiel gemäß Fig. 1 im wesentlichen dadurch unterscheidet, daß mit den Laschen 8, 10 separate Endteile 44, 46 verbunden sind, die in Fig. 7 von den Laschen 8, 10 abgehoben dargestellt sind. Die Endteile 44, 46 sind bei diesem Ausführungsbeispiel durch Formteile gebildet, die vollständig aus einem thermoplastischen Elastomer bestehen. Die Endteile 44, 46 sind bei dem Ausführungsbeispiel auf in Montageposition einander zugewandte ebene Flächen 48, 50 der Laschen 8, 10 aufgespritzt. Sie können jedoch auch auf beliebige andere Weise mit den Laschen 8, 10 verbunden sein. Die Endteile 44, 46 weisen in Montageposition dichtend aneinander anliegende Dichtflächen 52, 54 auf.

In Fig. 8 ist ein viertes Ausführungsbeispiel einer erfindungsgemäßen Einrichtung 2 dargestellt, das sich von dem Ausführungsbeispiel gemäß Fig. 1 dadurch unterscheidet, daß das Trägerelement 6 in Axialrichtung des Grundkörpers 4 zueinander beabstandete, sich in Umfangsrichtung erstreckende Sicken 56, 58 aufweist, in denen separate Dichtlippenteile 60, 62 aus thermoplastischem Elastomer aufgenommen sind. Die Dichtlippenteile 60, 62, die in die Sicken 56, 58 eingeklebt oder formschlüssig oder klemmend in diesen gehalten sein können, weisen jeweils zwei in Axialrichtung zueinander beabstandete Dichtlippen 64, 66 bzw. 68, 70 auf.

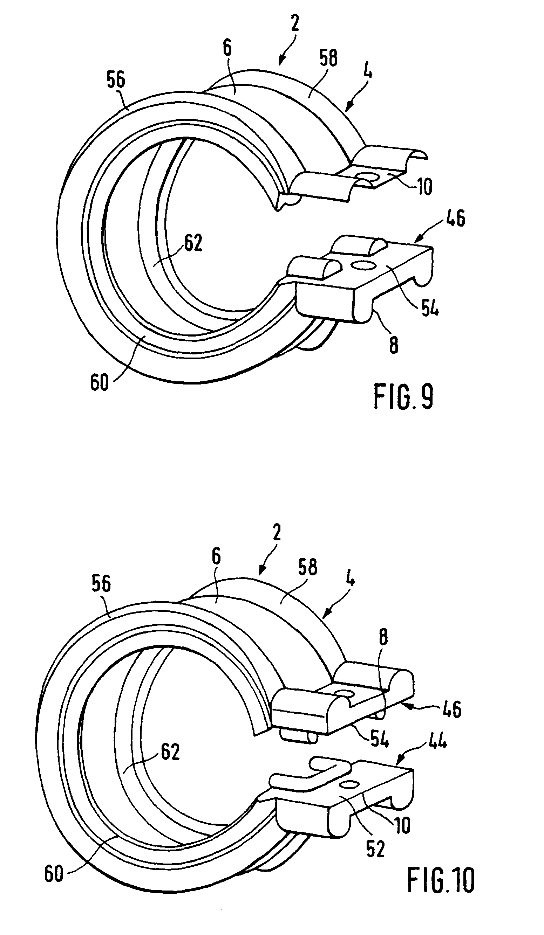

In Fig. 9 ist die Einrichtung 2 gemäß Fig. 8 dargestellt, wobei mit der Lasche 8 das Endteil 46 verbunden ist. Um in einem Bereich, in dem die Dichtlippenteile 60, 62 an die Dichtfläche 54 angrenzen, Undichtigkeiten zu vermeiden, kann das Endteil 46 zu den freien Enden der angrenzenden Dichtlippenteile 60, 62 komplementäre Ausnehmungen aufweisen, in die die Dichtlippenteile 60, 62 mit ihren freien Enden eingreifen. Das Endteil 46 kann jedoch auch mit den Enden der Dichtlippenteile 60, 62 innig verbunden sein, beispielsweise durch Anspritzen.

Fig. 10 zeigt die Einrichtung gemäß Fig. 9, wobei das Endteil 44 in zu dem Endteil 46 entsprechender Weise mit dem Trägerelement 6 verbunden ist. Bei der Ausführungsform gemäß den Fig. 8 bis 10 bestehen die Dichtlippenteile 60, 62 vorzugsweise aus dem gleichen thermoplastischen Elastomer wie die Endteile 44, 46. Die Dichtlippenteile 60, 62 können auch mit den Endteilen 44, 46 einstückig ausgebildet sein. Die Dichtlippenteile 60, 62 und/oder die Endteile 44, 46 können beispielsweise auch auf das Trägerelement 6 aufgespritzt sein.

## Patentansprüche

1. Abdichtungseinrichtung zum Bilden einer Abdichtung an der Außenfläche von insbesondere länglichen, beispielsweise im wesentlichen zylindrischen Körpern, beispielsweise Rohren oder Kabeln (32),
mit einem in Montageposition mit Dichtlippen (18, 20; 22, 24) dichtend an der Außenfläche des Körpers anliegenden Grundkörper (4), der wenigstens teilweise aus elastischem Material besteht,
**dadurch gekennzeichnet**,
daß das elastische Material wenigstens teilweise durch wenigstens ein thermoplastisches Elastomer (TPE) gebildet ist und
daß der Grundkörper (4) ein Trägerelement (6) aufweist, mit dem das thermoplastische Elastomer verbunden ist.

2. Einrichtung nach Anspruch 1, **dadurch gekennzeichnet**, daß der Grundkörper (4) biegsam ausgebildet ist.

3. Einrichtung nach Anspruch 1 oder 2, **dadurch gekennzeichnet**, daß der Grundkörper (4) derart ausgebildet ist, daß er in Montageposition den zu kontaktierenden Körper vorzugsweise ringförmig oder muffenförmig umgreift.

4. Einrichtung nach einem der vorhergehenden Ansprüche, **dadurch gekennzeichnet**, daß der Grundkörper (4) als um den zu kontaktierenden Körper spannbare Schelle ausgebildet ist.

5. Einrichtung nach einem der vorhergehenden Ansprüche, **dadurch gekennzeichnet**, daß der Grundkörper (4) einteilig ausgebildet ist und an seinen freien Enden abgewinkelte oder abgebogene Laschen (8, 10) aufweist, die in Montageposition miteinander verbindbar sind, vorzugsweise mittels einer Schraubvorrichtung oder einer Klemmvorrichtung.

6. Einrichtung nach Anspruch 1, **dadurch gekennzeichnet**, daß das elastische Material der Dichtlippen (18, 20; 22, 24) wenigstens teilweise aus wenigstens einem thermoplastischen Elastomer besteht.

7. Einrichtung nach Anspruch 1, **dadurch gekennzeichnet**, daß die Dichtlippen (18, 20; 22, 24) separat ausgebildet sind oder mit dem elastischen Material des Grundkörpers (4) verbunden oder einstückig mit diesem ausgebildet sind.

8. Einrichtung nach einem der vorhergehenden Ansprüche, **dadurch gekennzeichnet**, daß das thermoplastische Elastomer wenigstens eine der folgenden Materialeigenschaften aufweist:
- die Shorehärte (A) beträgt etwa 35-85, vorzugsweise etwa 47-70, insbesondere etwa 64,
- der Druckverformungsrest beträgt weniger als etwa 40%, vorzugsweise weniger als etwa 25% ,
- die Zugfestigkeit beträgt mehr als etwa 6 MPa,
- die Reißdehnung beträgt mehr als etwa 300%,
- der Kälterichtwert beträgt weniger als etwa - 20°C, vorzugsweise weniger als etwa -40°C, insbesondere etwa -50°C,
- die Härteänderung nach Alterung ist nicht höher als etwa ±3,
- die Änderung der Zugfestigkeit nach Alterung ist nicht größer als etwa ±15%,
- die Änderung der Reißdehnung nach Alterung ist nicht größer als etwa ±20%,
- das thermoplastische Elastomer ist ozonbeständig und/oder UV-beständig und/oder ölbeständig und/oder witterungsbeständig.

9. Einrichtung nach einem der vorhergehenden Ansprüche, **dadurch gekennzeichnet**, daß das Trägerelement (6) bandförmig ausgebildet ist und sich in Längsrichtung bzw. Umfangsrichtung des Grundkörpers (4) vorzugsweise über dessen gesamte Länge erstreckt und vorzugsweise die Laschen (8, 10) bildet.

10. Einrichtung nach einem der vorhergehenden Ansprüche, **dadurch gekennzeichnet**, daß das Trägerelement aus Metall, insbesondere aus Messing und/oder Sondermessing und/oder niedrig legiertem Kupfer und/oder Chrom-Nickel-legiertem Stahl besteht.

11. Einrichtung zum elektrisch leitenden Kontaktieren eines elektrisch leitenden Teiles (34) eines insbesondere länglichen, beispielsweise im wesentlichen zylindrischen Körpers, beispielsweise eines Rohres oder eines Kabels (32),
**dadurch gekennzeichnet**,
daß die Einrichtung zum elektrisch leitenden Kontaktieren eine Einrichtung (2) nach einem der vorhergehenden Ansprüche und Kontaktmittel zum Herstellen einer elektrisch leitenden Verbindung zwischen dem zu kontaktierenden Körper und einem Leiter, beispielsweise einem Erdungskabel, aufweist.

12. Einrichtung nach Anspruch 11, **dadurch gekennzeichnet**, daß die Kontaktmittel ein Kontaktelement (36) aufweisen, das an einer in Montageposition dem zu kontaktierenden Körper zugewandten Seite des Grundkörpers (4) angeordnet ist.

13. Einrichtung nach Anspruch 12, **dadurch gekennzeichnet**, daß das Kontaktelement (36) aus Metall besteht.

14. Einrichtung nach Anspruch 13, **dadurch gekennzeichnet**, daß das Kontaktelement (36) durch eine flache Litze, ein flaches Band oder ein Geflechtband aus Metall gebildet ist.

15. Einrichtung nach einem der Ansprüche 12 bis 14, **dadurch gekennzeichnet**, daß das Kontaktelement (36) mit dem Trägerelement (6) verbunden ist.

16. Einrichtung nach Anspruch 11, **dadurch gekennzeichnet**, daß der Grundkörper (4) wenigstens einen Kontaktvorsprung (38, 40, 42) aus elektrisch leitfähigem Material aufweist, der in Montageposition an dem elektrisch leitfähigen Teil des zu kontaktierenden Körpers anliegt und so die Kontaktmittel bildet.

17. Einrichtung nach Anspruch 16, **dadurch gekennzeichnet**, daß der oder jeder Kontaktvorsprung (38, 40, 42) an dem Trägerelement ausgebildet ist.

18. Einrichtung nach einem der vorhergehenden Ansprüche, **dadurch gekennzeichnet**, daß das thermoplastische Elastomer durch ein thermoplastisches Polyurethan (TPE-U) und/oder ein Styrolblockcopolymer (TPE-S) und/oder ein thermpoplastisches Polyolefin-Elastomer (TPE-O) und/oder ein thermoplastisches Copolyester (TPE-E) und/oder ein Polyether-Polyamidblockcopolymer und/oder eine Elastomerlegierung wenigstens eines thermoplastischen Elastomeres ist.

19. Verfahren zur Herstellung eines aus wenigstens einem thermoplastischen Elastomer und wenigstens einem Trägerwerkstoff bestehenden Verbundproduktes, insbesondere einer Einrichtung nach einem der vorhergehenden Ansprüche,
bei dem das thermoplastische Elastomer durch Schweißen oder Aufspritzen bzw. Anspritzen mit dem Trägerwerkstoff verbunden wird.

20. Verfahren nach Anspruch 19, **dadurch gekennzeichnet**, daß das Verschweißen durch Spiegelverschweißen erfolgt.

21. Verfahren nach Anspruch 19 oder 20, **dadurch gekennzeichnet**, daß der Trägerwerkstoff aus Metall und/oder Kunststoff, insbesondere Nylon, besteht.

## Claims

1. A sealing device for forming a seal on the external surface of in particular elongated, illustratively substantially cylindrical bodies such as cables or pipes/tubes, comprising a base structure (4) which in the assembly position rests with sealing lips (18, 20; 22, 24) against the body to be contacted in a sealing manner and which is composed at least in part of an elastic material,
**characterized in that**
the elastic material consists at least in part of at least one thermoplastic elastomer (TPE) and
the base structure (4) comprises a support element (6) to which is connected the thermoplastic elastomer.

2. A device as claimed in claim 1, **characterized in that** the base structure (4) is flexible.

3. A device as claimed in either of claims 1 and 2, **characterized in that** the base structure (4) is designed to enclose the body to be contacted preferably annularly or like a bush when in the assembly position.

4. Device as claimed in one of the above claims, **characterized in that** the base structure (4) is designed as a clamp which can be tightened around the body to be contacted.

5. Device as claimed in one of the above claims, **characterized in that** the base structure (4) is integral and comprises substantially orthogonal brackets (8, 10) at its free ends, these brackets being connectable preferably using screws or clamps.

6. Device as claimed in claim 1, **characterized in that** the elastic material of the sealing lips (18, 20, 22, 24) at least in part consists of a thermoplastic elastomer.

7. Device as claimed in claim 1, **characterized in that** the sealing lips (18, 20, 22, 24) are separate, or are connected to the elastic material of the base structure (4), or are integral with this material.

8. Device as claimed in one of the above claims, **characterized in that** the thermoplastic elastomer evinces at least one of the following material properties:
- the shore hardness (A) is about 35 to 85, preferably about 47 to 70, in particular about 64,
- the compression "set" is less than about 40 %, preferably less than about 25 %,
- the tensile strength is higher than about 6 Mpa,
- the tear elongation is higher than about 300 %,
- the cold standard is lower than about -20°C, preferably lower than about -40°C, in particular about -50°C,
- the change in hardness following aging does not exceed about ± 3,
- the change in tensile strength following aging is no larger than about ± 15%,
- the change in tear elongation following aging is no higher than about ± 20 %,
- the thermoplastic elastomer is ozone-proof, and/or uv proof, and/or oil-proof, and/or weather-proof.

9. Device as claimed in one of the above claims, **characterized in that** the support element (6) is in the form of a band and runs in the longitudinal or the circumferential direction of the base structure (4), preferably over its full length and preferably forms the brackets (8, 10).

10. Device as claimed in one of the above claims, **characterized in that** the support element is made of a metal, in particular brass or high-strength brass and/or low-alloy copper and/or steel alloyed with chromium-nickel.

11. Device to contact in electrically conducting manner an electrically conducting part (34) of in particular an elongated, illustratively substantially cylindrical body, for instance a pipe or a cable (32),
**characterized in that**
the device contacting in electrically conducting manner comprises a device (2) as claimed in one of the above claims and contacting means to set up an electrically conducting connection between the body to be contacted and a conductor, for instance a grounding cable.

12. Device as claimed in claim 11, **characterized in that** the contacting means comprise a contact element (36) mounted at a side of the base structure (4) which in the assembly position faces the body to be contacted.

13. Device as claimed in claim 12, **characterized in that** the contact element (36) is metallic.

14. Device as claimed in claim 13, **characterized in that** the contacting element (36) is a flat strand, a flat band or a braided band.

15. Device as claimed in one of claims 12 through 14, **characterized in that** the contact element (36) is connected to the support element (6).

16. Device as claimed in claim 11, **characterized in that** the base structure (4) comprises at least one contact protrusion (38, 40, 42) made of an electrically conducting material and which in the assembly position rests against the electrically conducting part of the body to be contacted and thereby forms the contact means.

17. Device as claimed in claim 16, **characterized in that** the or each contact protrusion (38, 40, 42) is formed on the support element.

18. Device as claimed in one of the above claims, **characterized in that** the thermoplastic elastomer is a thermoplastic polyurethane (TPE-U) and/or a styrene block copolymer (TPE-S) and/or a thermoplastic polyolefin elastomer (TPE-O) and/or a polyether-polyamide block copolymer and/or a thermoplastic copolyester (TPE-E) and/or an elastomer alloy of at least one thermoplastic elastomer.

19. A method for manufacturing a composite product composed of at least one thermoplastic elastomer and at least one support material, in particular a device as claimed in one of the above claims, wherein the thermoplastic element is connected by fusion or over-injection with the support material.

20. Method as claimed in claim 19, characterized in that the fusion is implemented by mirror welding.

21. Method as claimed in either of claims 19 and 20, characterized in that the support material is metallic and/or a plastic, in particular nylon.

## Revendications

1. Dispositif d'étanchéité pour former une étanchéification à la surface extérieure de corps, en particulier allongés, par exemple essentiellement cylindriques, par exemple des tubes ou des câbles (32),
avec un corps de base (4) en appui de manière étanche, en position de montage, par des lèvres d'étanchéité (18, 20 ; 22, 24), sur la surface extérieure du corps, qui est constitué au moins partiellement d'un matériau élastique,
caractérisé en ce
que le matériau élastique est formé au moins partiellement par au moins un élastomère thermoplastique (ETP) et
que le corps de base (4) présente un élément porteur (6) auquel l'élastomère thermoplastique est relié.

2. Dispositif selon la revendication 1,
caractérisé en ce que le corps de base (4) est réalisé souple.

3. Dispositif selon la revendication 1 ou 2,
caractérisé en ce que le corps de base (4) est conforme de telle manière que, en position de montage, il entoure le corps à contacter de préférence sous forme annulaire ou sous forme de manchon.

4. Dispositif selon l'une des revendications précédentes,
caractérisé en ce que le corps de base (4) est réalisé sous forme d'une bride pouvant être tendue autour du corps à contacter.

5. Dispositif selon l'une des revendications précédentes,
caractérisé en ce que le corps de base (4) est réalisé d'une seule pièce et présente à ses extrémités libres des plaquettes (8, 10) repliée ou recourbées qui peuvent être reliées l'une à l'autre en position de montage, de préférence au moyen d'un dispositif de vissage ou d'un dispositif de serrage.

6. Dispositif selon la revendication 1,
caractérisé en ce que le matériau élastique des lèvres d'étanchéité (18, 20 ; 22, 24) est constitué au moins partiellement d'au moins un élastomère thermoplastique.

7. Dispositif selon la revendication 1,
caractérisé en ce que les lèvres d'étanchéité (18, 20 ; 22, 24) sont réalisées séparément ou bien sont reliées au matériau élastique du corps de base (4) ou réalisées d'une seule pièce avec celui-ci.

8. Dispositif selon l'une des revendications précédentes,
caractérisé en ce que l'élastomère thermoplastique présente au moins l'une des propriétés de matériau suivantes :
- la dureté Shore (A) est d'environ 35-85, de préférence environ 47-70, en particulier environ 64,
- la déformation résiduelle de compression est inférieure à 40%, de préférence inférieure à environ 25%,
- la résistance à la traction est supérieure à environ 6MPa,
- l'élongation à la rupture est supérieure à environ 300%,
- la grandeur de référence au froid est inférieure à environ -20°C, de préférence inférieure à environ -40°C, en particulier environ -50°C,
- la modification de dureté après vieillissement n'est pas supérieure à environ ± 3%,
- la modification de la résistance à la traction après vieillissement n'est pas supérieure à environ ± 15%,
- la modification de l'élongation à la rupture après vieillissement n'est pas supérieure à environ ± 20%,
- l'élastomère thermoplastique est résistant à l'ozone et/ou résistant aux UV et/ou résistant aux huiles et/ou résistant aux agents atmosphériques.

9. Dispositif selon l'une des revendications précédentes,
caractérisé en ce que l'élément porteur (6) est réalisé en forme de bande et s'étend en direction longitudinale ou respectivement en direction périphérique du corps de base (4), de préférence sur la totalité de sa longueur, et forme de préférence les plaquettes (8, 10).

10. Dispositif selon l'une des revendications précédentes,
caractérisé en ce que l'élément porteur est constitué d'un métal, en particulier de laiton et/ou de laiton spécial et/ou de cuivre faiblement allié et/ou d'acier allié chrome-nickel.

11. Dispositif pour la mise en contact électriquement conducteur d'une pièce (34) électriquement conductrice d'un corps en particulier allongé, par exemple essentiellement cylindrique, par exemple d'un tube ou d'un câble (32),
caractérisé en ce
que le dispositif pour la mise en contact électriquement conducteur présente un dispositif (2) selon l'une des revendications précédentes et des moyens de contact pour l'établissement d'une liaison électriquement conductrice entre le corps à contacter et un conducteur, par exemple un câble de mise à la terre.

12. Dispositif selon la revendication 11,
caractérisé en ce que les moyens de contact présentent un élément de contact (36) qui est disposé sur une face du corps de base (4) tournée, en position de montage, vers le corps à contacter.

13. Dispositif selon la revendication 12,
caractérisé en ce que l'élément de contact (36) est constitué d'un métal.

14. Dispositif selon la revendication 13,
caractérisé en ce que l'élément de contact (36) est formé par un cordon plat, une bande plate ou une bande en treillis en métal.

15. Dispositif selon l'une des revendications 12 à 14,
caractérisé en ce que l'élément de contact (36) est lié à l'élément porteur (6).

16. Dispositif selon la revendication 11,
caractérisé en ce que le corps de base (4) présente au moins une saillie de contact (38, 40, 42) en matériau électriquement conducteur qui, en position de montage, est en appui sur la partie électriquement conductrice du corps à contacter et forme ainsi les moyens de contact.

17. Dispositif selon la revendication 16,
caractérisé en ce que la ou chaque saillie de contact (38, 40, 42) est formée sur l'élément porteur.

18. Dispositif selon l'une des revendications précédentes,
caractérisé en ce que l'élastomère thermoplastique peut être formé par un polyuréthane thermoplastique (ETP-U) et/ou un copolymère en masse de styrène (ETP-S) et/ou un élastomère thermoplastique de polyoléfine (ETP-O) et/ou un copolyester thermoplastique (ETP-E) et/ou un copolymère en masse polyéther-polyamide et/ou un alliage élastomère d'au moins un élastomère thermoplastique.

19. Procédé de fabrication d'un produit composite d'au moins un élastomère thermoplastique et d'au moins un matériau porteur, en particulier d'un dispositif selon l'une des revendications précédentes,
dans lequel l'élastomère thermoplastique est lié au matériau porteur par soudage ou par projection ou respectivement par aspersion.

20. Procédé selon la revendication 19,
caractérisé en ce que le soudage est effectué par soudage miroir.

21. Procédé selon la revendication 19 ou 20,
caractérisé en ce que le matériau porteur est constitué d'un métal et/ou d'une matière synthétique, en particulier de nylon.
